# EUROPÄISCHE PATENTSCHRIFT

(11) **EP 4 073 650 B1**
(45) Veröffentlichungstag und Bekanntmachung des Hinweises auf die Patenterteilung: **13.09.2023**
(21) Anmeldenummer: 21701903.3
(22) Anmeldetag: 13.01.2021
(51) Int. Cl.: G06F 11/10, G06F 8/65

(54) **VERFAHREN ZUR KENNZEICHNUNG UND VERIFIZIERUNG EINER STEUERUNGSSOFTWARE EINES SCHIENENFAHRZEUGS**
METHOD FOR IDENTIFYING AND VERIFYING CONTROL SOFTWARE OF A RAIL VEHICLE
PROCÉDÉ D'IDENTIFICATION ET DE VÉRIFICATION DE LOGICIEL DE COMMANDE D'UN VÉHICULE FERROVIAIRE

(30) Priorität: 03.02.2020 DE 102020201257
(43) Veröffentlichungstag der Anmeldung: 19.10.2022
(73) Patentinhaber: Siemens Mobility GmbH, 81739 München (DE)
(72) Erfinder: WEBER, Matthias Alexander, 91080 Uttenreuth (DE)
(74) Vertreter: Siemens Patent Attorneys
(86) Internationale Anmeldenummer: PCT/EP2021/050534
(87) Internationale Veröffentlichungsnummer: WO 2021/156027

(56) Entgegenhaltungen:
- US-A1- 2016 266 890
- US-A1- 2018 024 826
- US-A1- 2019 342 152

## Beschreibung

Die Erfindung betrifft ein Verfahren zur Kennzeichnung und Verifizierung einer Steuerungssoftware eines Schienenfahrzeugs.

Schienenfahrzeuge, die für einen länderübergreifenden Einsatz konzipiert sind, verfügen über eine Steuerungssoftware, deren funktionale Elemente, zum Teil in Blöcken strukturiert, untrennbar miteinander verbunden sind.

Eine Steuerungssoftware entspricht landestypischen Vorgaben und wird für ein Streckennetz eines Landes zugelassen und verifiziert.

Über die Steuerungssoftware wird eine Prüfsumme gebildet. Basierend auf der Prüfsumme erfolgt die länderspezifische Zulassung und wird die Verifikation der Steuerungssoftware für dieses Land sichergestellt.

US2016266890 offenbart ein Verfahren zur Identifikation und Verifikation der Steuerungssoftware für ein mobiles Gerät. Eine Prüfsumme wird über die Steuerungssoftware gebildet um die Steuerungssoftware zu identifizieren und zu verifizieren.

Bei unterschiedlichen landestypischen Vorgaben ergeben sich unterschiedliche Versionen einer betrachteten Steuerungssoftware für jeweilige Länder.

Seitens der Hersteller der Steuerungssoftware besteht der Wunsch, für eine Vielzahl an Ländern eine einheitliche, zugelassene Steuerungssoftware zu verwenden.

Davon ausgehend werden nachfolgend beispielhaft Nachteile beim Zulassungsprozess in Europa geschildert:
Es besteht das Risiko, dass eine in einem ersten Länderkreis Europas bereits zugelassene Steuerungssoftware aufgrund eines Einwands eines weiteren Landes geändert werden muss.

Bei einer geplanten, Länder-übergreifenden Verwendung verliert die nun geänderte Steuerungssoftware die bereits erteilten Zulassungen in den Ländern des ersten Länderkreises Europas und muss in diesen erneut zur Zulassung gebracht werden.

Zusätzlich besteht die Gefahr, dass bei ausgewählten Funktionen der Steuerungssoftware länderspezifische Unterscheidungen verlangt werden, so dass Europa-weit zueinander widersprüchliche Ansätze für die Steuerungssoftware zu lösen sind.

Um diese Nachteile zu minimieren bzw. zu beseitigen ist es bekannt, auf dem Schienenfahrzeug länderspezifische Steuerungssoftware vorzuhalten. Bei einem Grenzübertritt wird dann eine zugehörige länderspezifische Steuerungssoftware ausgewählt und in ein Steuergerät des Schienenfahrzeugs geladen.

Dieser Ansatz birgt jedoch folgende Nachteile:
- es muss im Fahrzeug ein redundantes Speichersystem für unterschiedliche Steuerungssoftware bzw. für unterschiedliche Steuerungsprogramme und Parameter vorgesehen werden,
- Programme und Parameter müssen an den Ländergrenzen umgeladen werden, wobei das Umladen aufgrund der Programmgröße zeitintensiv ist,
- es müssen Vorkehrungen dafür getroffen werden, ob das Umladen beim stehenden oder beim betriebenen Schienenfahrzeug während des Grenzübertritts erfolgen soll,
- Fragen der Verantwortung beim Umladen müssen geklärt sein (beispielsweise, ob das Umladen über den Schienenfahrzeugführer erfolgen darf/soll oder nicht),
- für den Fall, dass eine Behörde eine Zulassung verweigert, müssen ggf. ältere, zugelassene Programme und Parameter vorgehalten werden, um geladen werden zu können,
- bei der Wartung muss sichergestellt werden, dass jeweils richtige Steuerungssoftware-Sätze auf die redundanten Speichersysteme eingespielt werden,
- typischerweise sind mehrere Steuergeräte in einem Schienenfahrzeug verbaut, so dass sich die Anzahl der Programme multipliziert und erhöhte Stückkosten die Folge sind,
- zuletzt muss ein erhöhter Aufwand in Entwicklung, Verwaltung und Pflege der Programme investiert werden.

Zusammengefasst ist die Praxistauglichkeit dieses Ansatzes stark eingeschränkt.

Es ist daher die Aufgabe der vorliegenden Erfindung, eine Steuerungssoftware für ein Schienenfahrzeug derart anzugeben, dass eine erleichterte Zulassung ermöglicht wird und gleichzeitig die oben genannten Nachteile zumindest reduziert bzw. gänzlich vermieden werden.

Diese Aufgabe wird durch die Merkmale des Anspruchs 1 gelöst. Vorteilhafte Weiterbildungen sind in den jeweiligen abhängigen Ansprüchen angegeben.

Beim erfindungsgemäßen Verfahren zur Kennzeichnung und Verifizierung von Steuerungssoftware eines Schienenfahrzeugs wird die Steuerungssoftware durch Funktionen beschrieben, die in ihrer Gesamtheit gesehen strukturell miteinander vernetzt sind.

Eine Funktion erfüllt eine ihr zugeordnete Aufgabe, während die Gesamtheit der Vernetzung der Funktionen als Struktur der Steuerungssoftware bezeichnet wird.

Für jede Funktion wird eine funktionsabhängige Prüfsumme erstellt, wobei Änderungen an einer Funktion durch eine Änderung der jeweiligen Prüfsumme angezeigt wird.

Für die Struktur wird eine strukturabhängige Prüfsumme erstellt, wobei eine Änderung an der Struktur durch eine Änderung der strukturellen Prüfsumme angezeigt wird.

Aus den funktionsabhängigen Prüfsummen der verwendeten Funktionen und aus der strukturabhängigen Prüfsumme der Struktur wird eine Gesamtprüfsumme gebildet, die einen eindeutigen Fingerabdruck einer bestimmten Steuerungssoftware bildet und zur Verifikation benutzt wird.

Eine Zulassung in einem Land wird basierend auf der Gesamtprüfsumme durchgeführt.

Eine länderspezifische Änderung wird an ausgesuchten Funktionen und/oder an der Struktur durchgeführt. Damit werden die funktionsabhängigen Prüfsummen und/oder die strukturabhängige Prüfsumme und letztlich die Gesamtprüfsumme geändert.

Die länderspezifische Änderung verursacht also eine Änderung der Gesamtprüfsumme, die damit diese Änderung anzeigt.

Eine notwendige Folgezulassung wird basierend auf der Gesamtprüfsumme durchgeführt.

Eine unveränderte Gesamtprüfsumme zeigt eine unveränderte Steuerungssoftware an, die nicht erneut länderspezifisch geprüft und zugelassen werden muss.

Entsprechend zeigt eine veränderte Gesamtprüfsumme eine veränderte Steuerungssoftware an, die erneut länderspezifisch geprüft und zugelassen werden muss.

Im Rahmen eines an der Steuerungssoftware vornehmbaren Detailgutachtens zeigen unveränderte Funktions-Prüfsummen unveränderte Funktionen an, deren Einfluss auf die Steuerungssoftware ggf. nicht erneut geprüft werden muss.

Entsprechend zeigen veränderte Funktions-Prüfsummen veränderte Funktionen an, deren Einfluss auf die Steuerungssoftware erneut geprüft werden muss.

In einer vorteilhaften Weiterbildung wird also bei unveränderten Funktionen und bei unveränderter Struktur der Steuerungssoftware eine Gesamtprüfsumme gebildet, die eine unveränderten Steuerungssoftware anzeigt.

Bei einer länderspezifisch bedingten Änderung der Steuerungssoftware wird aus einer ausgesuchten unveränderten Funktion durch Änderung der Funktion eine länderspezifische Funktion gebildet. Durch die Bildung der länderspezifischen Funktion wird eine länderspezifische Gesamtprüfsumme gebildet, die sich von der Gesamtprüfsumme der unveränderten Steuerungssoftware unterscheidet.

Bei einer länderspezifisch bedingten Änderung der Struktur der Steuerungssoftware wird eine länderspezifische Struktur gebildet. Durch die Bildung der länderspezifischen Struktur wird eine länderspezifische Gesamtprüfsumme gebildet, die sich von der Gesamtprüfsumme der unveränderten Steuerungssoftware unterscheidet.

In einer vorteilhaften Weiterbildung wird in der Steuerungssoftware entweder die länderspezifische Funktion oder die unveränderte Funktion mit Hilfe einer Länderkennung aktiviert und betrieben.

Bei aktivierter länderspezifischer Funktion und bei unveränderter Struktur der Steuerungssoftware wird die länderspezifische Gesamtprüfsumme der Steuerungssoftware zur Verifikation angezeigt.

Bei aktivierter unveränderter Funktion und bei unveränderter Struktur der Steuerungssoftware wird die Gesamtprüfsumme der unveränderten Steuerungssoftware zur Verifikation angezeigt.

In einer vorteilhaften Weiterbildung wird die Länderkennung in Abhängigkeit des Streckennetzes gewählt, in dem sich das Schienenfahrzeug befindet oder in den das Schienenfahrzeug fährt bzw. einfährt.

In einer vorteilhaften Weiterbildung wird die Länderkennung und/oder eine entsprechende Versionsnummer der Steuerungssoftware, die auf der Gesamtprüfsumme der Steuerungssoftware basiert, dem Schienenfahrzeugführer zu Kontrollzwecken angezeigt.

In einer vorteilhaften Weiterbildung versorgt eine erste Funktion sowohl die unveränderte Funktion als auch die länderspezifische Funktion als nachgeschaltete Funktionen mit Ergebnissen. Die beiden nachgeschalteten Funktionen ermitteln jeweilige Ergebnisse. Unter Verwendung der Länderkennung, die auf einen Auswahlblock wirkt, wird jedoch nur eines der Ergebnisse an eine weitere Funktion übermittelt.

In einer vorteilhaften Weiterbildung werden bei der Ermittlung der Struktur im Signallauf der Steuerungssoftware Verzweigungspunkte detektiert. Über Verzweigungspunkte erkannte Verbindungen werden substituiert, um die Prüfsumme der Struktur zu berechnen.

Durch die vorliegende Erfindung wird der Zulassungsstand von Steuerungssoftware eines Schienenfahrzeugs eindeutig gekennzeichnet und damit eine Zulassung verifiziert.

Zusammengefasst wird für jede Streckennetz-abhängige bzw. Länder-abhängige Steuerungssoftware eine Gesamtprüfsumme über zugehörige Quellcodes erstellt und mit einer Versionsnummer versehen. Damit wird für jedes Land ein aussagekräftiger Fingerabdruck für die Steuerungssoftware gebildet.

Je nach nationalem Streckennetz, in dem das Schienenfahrzeug betrieben wird, wird die zugehörige Steuerungssoftware aktiviert und eine entsprechende Versionsnummer der Steuerungssoftware dem Schienenfahrzeugführer zu Kontrollzwecken angezeigt.

Werden nun für ein Streckennetz eines Landes, bspw. auf Grund von Anforderungen einer Zulassungsbehörde, Änderungen an der Steuerungssoftware durchgeführt, so wird der für dieses Streckennetz spezifische Anteil der Steuerungssoftware ergänzt bzw. modifiziert.

Von Änderungen betroffener überlappender Code bzw. Quellcode wird kopiert und modifiziert.

Über ein geeignetes Verfahren zur Erstellung des Fingerabdrucks kann für alle nicht geänderten, netzspezifischen Teile der Steuerungssoftware anhand der jeweiligen Prüfsummen gezeigt werden, dass diese sich nicht verändert haben, wodurch eine erneute Zulassung für diese Softwareteile bei Behörden, die diese Softwareteile bereits zugelassen haben, nicht mehr erforderlich ist.

Durch die vorliegende Erfindung wird ermöglicht,
- dass Zulassungskosten und Risiken gesenkt werden,
- dass die sogenannten "Time to Market"-Zeit reduziert wird, und
- dass netzspezifische Kundenwünsche aus Zulassungssicht aufwandsarm umsetzbar sind.

Die vorliegende Erfindung weist insbesondere einen Vorteil auf, wenn bei einer länderspezifischen Änderung der Steuerungssoftware die Struktur der Funktionen beibehalten werden kann.

Dann ist es möglich, in Abhängigkeit von Streckennetzen bzw. Ländern zwischen länderspezifischen Funktionen einfach umzuschalten. Die Steuerungssoftware selbst beinhaltet die jeweiligen Funktionen. Beim Grenzübertritt wird damit ein Hochladen einer länderspezifischen Steuerungssoftware vermieden, es erfolgt beim Grenzübertritt lediglich eine landesbedingte Funktionsumschaltung.

Durch das Umschalten von einer ausgewählten Funktion auf eine länderspezifische Funktion wird eine Zulassung in einem Zielland erreicht und über die zugehörige Gesamtprüfsumme angezeigt.

Zugleich bleibt eine bereits erteilte Zulassung in anderen Ländern erhalten, da für diese Länder die ausgewählte Funktion unverändert bleibt, wodurch sich weder die Prüfsummen der beteiligten Funktionen noch die Prüfsumme der Struktur noch die Gesamtprüfsumme ändert.

Nachfolgend wird die Erfindung beispielhaft anhand einer Zeichnung näher erläutert. Dabei zeigt:
- FIG 1: in einer Prinzipdarstellung eine Ausgangslage zum erfindungsgemäßen Verfahren,
- FIG 2: mit Bezug auf FIG 1 eine Situation für nachfolgende Betrachtungen zur Erfindung,
- FIG 3: mit Bezug auf die vorangehenden Figuren Details zum erfindungsgemäßen Verfahren,
- FIG 4: mit Bezug auf die FIG 3 eine vorteilhafte Ausgestaltung des erfindungsgemäßen Verfahrens, und
- FIG 5: mit Bezug auf FIG 4 eine vorteilhafte Weiterbildung des erfindungsgemäßen Verfahrens.

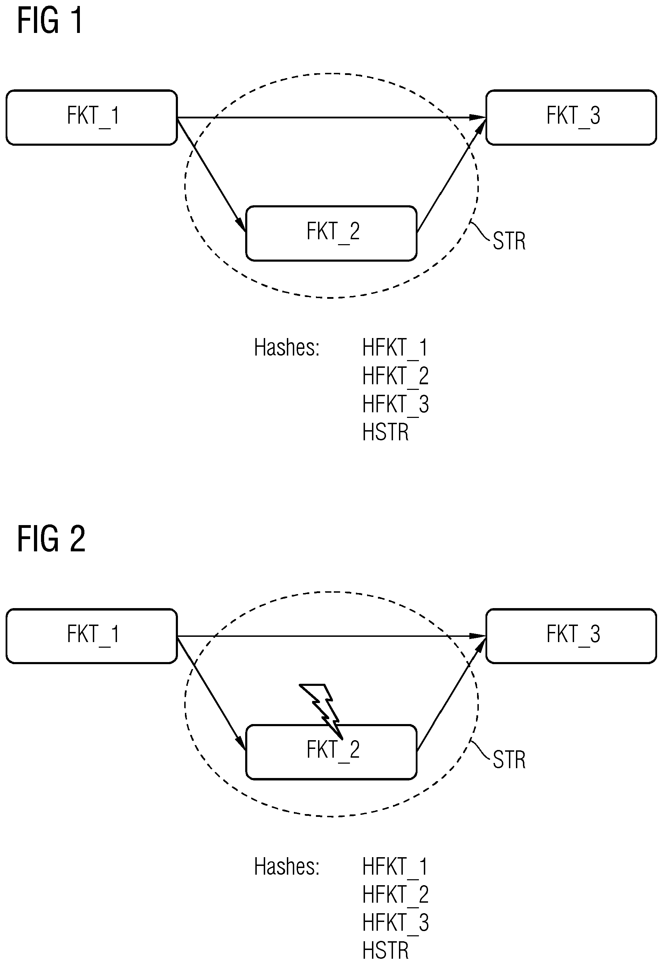

FIG 1 zeigt in einer Prinzipdarstellung eine Ausgangslage zum erfindungsgemäßen Verfahren für eine beabsichtigte Zulassung einer Steuerungssoftware eines Schienenfahrzeugs.

Das erfindungsgemäße Verfahren beruht darauf, dass die Steuerungssoftware als Programm durch eine Anzahl strukturell vernetzter Funktionen FKT_1, FKT_2, FKT_3 gebildet wird.

Jeder Funktion FKT_1, FKT_2, FKT_3 ist eine zu erfüllende Aufgabe zugeordnet.

Über jede Funktion FKT_1, FKT_2, FKT_3 wird jeweils eine Prüfsumme als sogenannter "Hash" gebildet, so dass
- eine erste Funktion FKT_1 eine erste Prüfsumme HFKT_1 aufweist,
- eine zweite Funktion FKT_2 eine zweite Prüfsumme HFKT_2 aufweist, und
- eine dritte Funktion FKT_3 eine dritte Prüfsumme HFKT_3 aufweist.

Die Funktionen FKT_1, FKT_2, FKT_3 der hier sehr einfach dargestellten Steuerungssoftware sind strukturell miteinander vernetzt.

Die Vernetzung der Funktionen FKT_1, FKT_2, FKT_3 bildet eine Struktur STR. Über diese Struktur STR wird ebenfalls eine als Hash bezeichnete Prüfsumme HSTR gebildet.

Bei der hier gezeigten Struktur STR ist die erste Funktion FKT_1 entweder direkt oder über die zweite Funktion FKT_2 mit der dritten Funktion FKT_3 verbunden.

Aus den Prüfsummen der Funktionen HFKT_1 bis HFKT_3 und aus der Prüfsumme der Struktur HSTR wird eine Gesamtprüfsumme HGES gebildet, die die Steuerungssoftware eindeutig beschreibt und damit als deren Fingerabdruck betrachtet werden kann.

Basierend auf der Gesamtprüfsumme HGES wird die Zulassung der Steuerungssoftware durchgeführt.

FIG 2 zeigt mit Bezug auf FIG 1 eine Situation für nachfolgende Betrachtungen zur Erfindung.

Hier wird davon ausgegangen, dass eine Zulassung in einem ausgewählten Land, das nachfolgend als Zielland ZLL bezeichnet wird, für die zweite Funktion FKT_2 nicht gegeben ist.

Beispielsweise wird im Rahmen der Zielland-Zulassung eine an das Zielland ZLL angepasste Funktionalität der zweiten Funktion FKT_2 gefordert. Diese Situation ist mit einem Blitzsymbol bei der zweiten Funktion FKT_2 dargestellt.

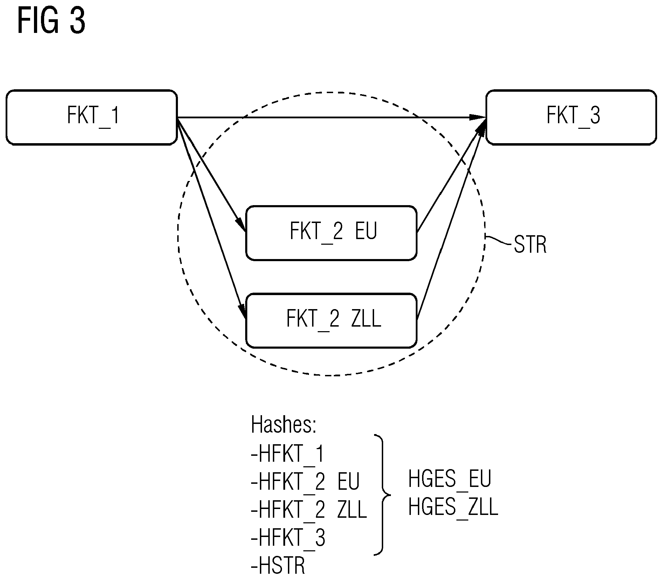

FIG 3 zeigt mit Bezug auf die vorangehenden Figuren Details zum erfindungsgemäßen Verfahren.

Es wird davon ausgegangen, dass eine erste Zulassung für Europa für die Steuerungssoftware erfolgt ist.

Diese Zulassung, die nachfolgend als EU-Zulassung bezeichnet wird, basiert auf einer Gesamtprüfsumme HGES_EU.

Die Steuerungssoftware ist jedoch nicht im Zielland ZLL zugelassen, das mit Bezug auf FIG 2 eine Änderung an der dort dargestellten zweiten Funktion FKT_2 verlangt.

Die Gesamtprüfsumme HGES_EU basiert somit auf:
- der ersten Prüfsumme HFKT_1 der ersten Funktion FKT_1
- einer zweiten Prüfsumme HFKT_2 EU einer zweiten Funktion FKT_2 EU,
- der dritten Prüfsumme HFKT_3 der dritten Funktion FKT_3, und auf
- der Prüfsumme HSTR der Struktur STR.

Mit Blick auf die vorstehenden Figuren entspricht die hier gezeigte zweite Funktion FKT_2 EU der in FIG 1 und FIG 2 beschriebenen zweiten Funktion FKT_2.

Damit entspricht die zweite Prüfsumme HFKT_2 EU der in FIG 1 und FIG 2 beschriebenen zweiten Prüfsumme HFKT_2.

Mit Blick auf die vorstehenden Figuren entspricht somit die Gesamtprüfsumme HGES_EU der EU-Zulassung der in FIG 1 und FIG 2 beschriebenen Gesamtprüfsumme HGES.

Die Zulassung für das Zielland ZLL, die nachfolgend als ZLL-Zulassung bezeichnet wird, basiert auf einer Gesamtprüfsumme HGES_ZLL.

Die Gesamtprüfsumme HGES_ZLL basiert auf:
- der ersten Prüfsumme HFKT_1 der ersten Funktion FKT_1
- einer zweiten Prüfsumme HFKT_2 ZLL einer zweiten Funktion FKT_2 ZLL,
- der dritten Prüfsumme HFKT_3 der dritten Funktion FKT_3, und basiert auf
- der Prüfsumme HSTR der Struktur STR.

Für das Zielland ZLL ist die Struktur STR der beteiligten Funktionen FKT_1, FKT_2 ZLL, FKT_3 mit Blick auf die vorstehenden Figuren unverändert.

Lediglich die zweite Funktion FKT_2 ZLL ist an länderspezifische Vorgaben des Ziellands ZLL bzw. an Vorgaben des zugehörigen Streckennetzes angepasst.

Entsprechend weist die zweite Funktion FKT_2 ZLL eine ihr zugeordnete zweite Prüfsumme HFKT_2 ZLL auf.

Wie vorstehend beschrieben werden "Hashes" bzw. Prüfsummen für die einzelnen Funktionen gebildet:
- für die erste Funktion FKT_1 die erste Prüfsumme HFKT_1,
- für die an das Zielland ZLL angepasste zweite Funktion FKT_2 ZLL die zweite Prüfsumme HFKT_2 ZLL, und
- für die dritte Funktion FKT_3 die dritte Prüfsumme HFKT_3.

Zu beachten ist, dass die Struktur STR für die Zielland-Zulassung und für EU-Zulassung gleich ist:
Für die EU-Zulassung ist die erste Funktion FKT_1 entweder direkt oder über die zweite Funktion FKT_2 EU mit der dritten Funktion FKT_3 verbunden.

Für die Zielland-Zulassung ist die erste Funktion FKT_1 entweder direkt oder über die zweite Funktion FKT_2 ZLL mit der dritten Funktion FKT_3 verbunden.

Damit ist die über die Struktur STR gebildete Prüfsumme HSTR für die Länder Europas und für das Zielland identisch.

Im Rahmen der EU-Zulassung, die beispielsweise für alle Länder Europas jedoch nicht für das Zielland ZLL gilt, verwendet also die dritte Funktion FKT_3 bei Bedarf Ergebnisse der zweiten Funktion FKT_2 EU, während im Rahmen der Zielland-Zulassung die dritte Funktion FKT_3 Ergebnisse der zweiten Funktion FKT_2 ZLL verwendet.

Für die EU-Zulassung werden die Prüfsummen HFKT_1, HFKT_2 EU, HFKT_3 und HSTR verwendet. Aus diesen Prüfsummen wird die Gesamtprüfsumme HGES_EU gebildet.

Für die Zielland-Zulassung werden die Prüfsummen HFKT_1, HFKT_2 ZLL, HFKT_3 und HSTR verwendet. Aus diesen Prüfsummen wird eine Gesamtprüfsumme HGES_ZLL gebildet.

Hier zeigt sich eindrucksvoll ein wesentlicher Vorteil der vorliegenden Erfindung:
Bei gleichbleibender Struktur STR ist es beim Entwurf der Steuerungssoftware möglich, in Abhängigkeit von Streckennetzen bzw. Ländern zwischen länderspezifischen Funktionen umzuschalten - hier je nach Land zwischen den zweiten Funktionen FKT_2 ZLL und FKT_2 EU.

Die Steuerungssoftware selbst beinhaltet beide Funktionen FKT_2 ZLL und FKT_2 EU. Beim Grenzübertritt wird damit ein Hochladen einer länderspezifischen Steuerungssoftware vermieden, es erfolgt beim Grenzübertritt lediglich eine Funktionsumschaltung.

Durch die länderspezifische zweite Funktion FKT_2 ZLL wird die Zielland-Zulassung erreicht und über die Gesamtprüfsumme HGES_ZLL angezeigt.

Zugleich bleibt die EU-Zulassung erhalten, da deren zweite Funktion FKT_2 EU = FKT_2 unverändert bleibt, wodurch sich auch die Gesamtprüfsumme HGES_EU = HGES nicht ändert.

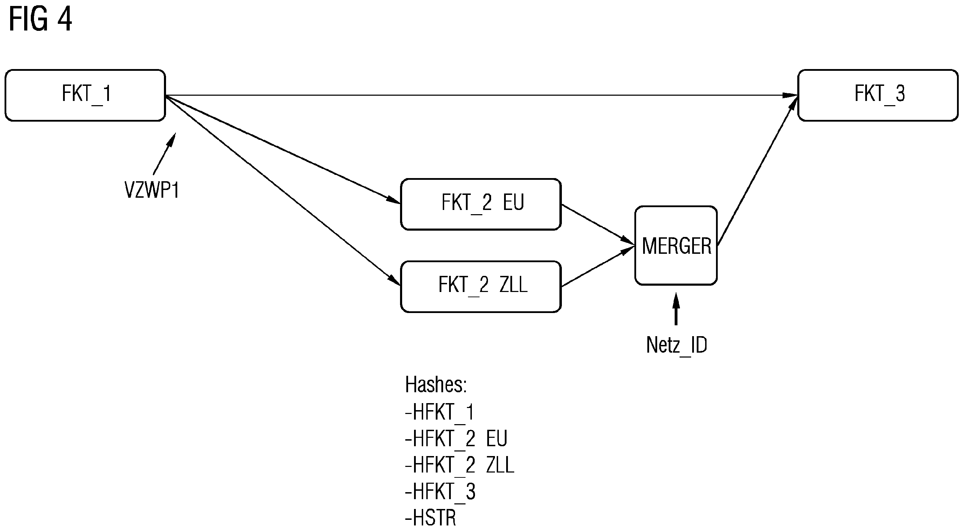

FIG 4 zeigt mit Bezug auf die FIG 3 eine vorteilhafte Ausgestaltung des erfindungsgemäßen Verfahrens.

Mit Bezug zum jeweiligen Ausgang der zweiten Funktion FKT_2 EU bzw. FKT_2 ZLL wird länderspezifisch eine Auswahl getroffen.

Diese Auswahl erfolgt durch einen Auswahlblock MERGER.

Der Auswahlblock MERGER kommt zum Einsatz, wenn mit Bezug auf den Auswahlblock MERGER alle vorgelagerten Funktionen, also hier FKT_1, FKT_2 EU und FKT_2 ZLL, parallel gerechnet wurden und jeweilige Funktionsergebnisse für eine dem Auswahlblock MERGER nachgelagerte Funktion, hier FKT_3, zur Auswahl stehen.

Der Auswahlblock MERGER wird je nach Streckennetz über eine Länderkennung Netz ID gesteuert.

Für den Auswahlblock MERGER gilt eine Länderkennung Netz_ID = ZLL, wenn sich das Schienenfahrzeug im Zielland befindet.

Entsprechend gilt für den Auswahlblock MERGER eine Länderkennung Netz_ID = EU, wenn sich das Schienenfahrzeug in den Ländern Europas befindet.

Befindet sich das Schienenfahrzeug im Zielland ZLL, werden vom Auswahlblock MERGER über die Netzkennung Netz_ID = ZLL die gerechneten Ergebnisse der zweiten Funktion FKT_2 ZLL an die dritte Funktion FKT_3 durchgeschaltet.

Befindet sich das Schienenfahrzeug in den Ländern Europas, werden vom Auswahlblock MERGER über die Netzkennung Netz_ID = EU die gerechneten Ergebnisse der zweiten Funktion FKT_2 EU an die dritte Funktion FKT_3 durchgeschaltet.

Bei der Ermittlung der Struktur STR wird beim Auswahlblock MERGER damit begonnen, Verzweigungspunkte zu suchen.

Über Verzweigungspunkte erkannte Verbindungen werden substituiert und eine Prüfsumme der Struktur HSTR berechnet.

Dies erfolgt beispielsweise dadurch, dass Teilnetze, die dem Auswahlblock MERGER vorgelagert sind, ermittelt werden:
Teilnetz 1: FKT_1 -> FKT_2 EU
Teilnetz 2: FKT_1 -> FKT_2 ZLL

Diese beiden Teilnetze werden geschnitten, um einen gemeinsamen Ursprung bzw. um einen gemeinsamen Schnittpunkt zu ermitteln.

Hier ist dies die erste Funktion FKT_1, die damit ausgangseitig einen Verzeigungspunkt, nämlich den Verzeigungspunkt VZWP1, aufweisen muss.

Der Auswahlblock MERGER selbst hat keinen Einfluss auf die Struktur STR, er ist funktionsneutral und wird nur zur länderspezifischen Auswahl von Funktionen, hier der Funktionen FKT_2 EU und FKT_2 ZLL, verwendet.

Damit hat der Auswahlblock MERGER keinen Einfluss auf die Prüfsumme HSTR, die sowohl für die Länder Europas als auch für das Zielland identisch ist.

Das hier in den vorstehenden Figuren gezeigte Beispiel einer Steuerungssoftware ist stark vereinfacht gewählt und dargestellt. Bei einer komplexen Steuerungssoftware ist je nach Signalfluss bei der Ermittlung von Teilnetzen mit einer Vielzahl an Schnittpunkten bzw. Verzeigungspunkten zu rechnen, die ermittelt und berücksichtigt werden müssen.

Nicht identische Schnittpunkte zeigen unterschiedliche Strukturen an, die zu entsprechend unterschiedlichen Struktur-Prüfsummen führen werden.

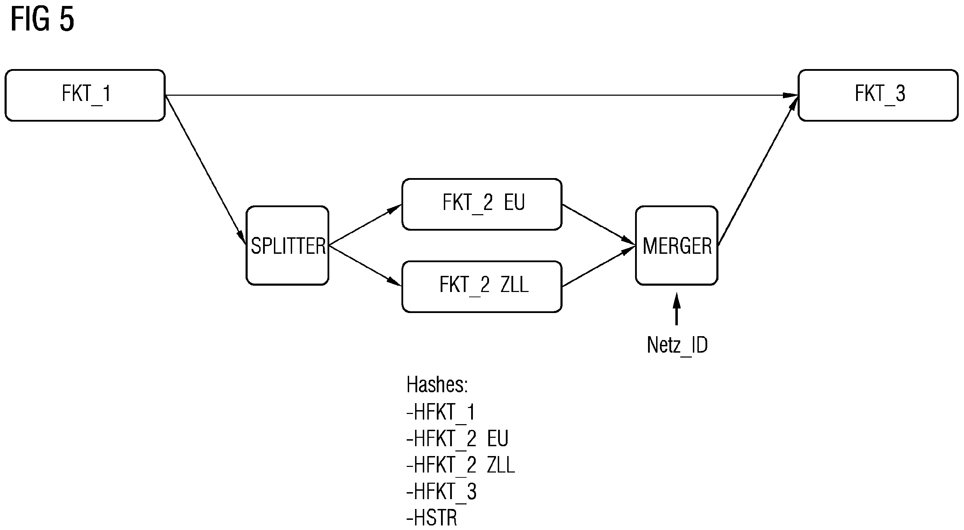

FIG 5 zeigt mit Bezug auf FIG 4 eine vorteilhafte Weiterbildung des erfindungsgemäßen Verfahrens.

Mit Bezug zum Ausgang der ersten Funktion FKT_1 und zu den Eingängen der zweiten Funktionen FKT_2 EU und FKT_2 ZLL ist ein Aufteilungsblock SPLITTER zwischengeschaltet.

Der Aufteilungsblock SPLITTER stellt Ergebnisse der ersten Funktion FKT_1 den beiden nachgeschalteten Funktionen FKT_2 EU bzw. FKT_2 ZLL zur Verfügung, die beide darauf basierend jeweilige Ergebnisse berechnen.

Der Aufteilungsblock SPLITTER hat keinen Einfluss auf die Struktur STR, er ist funktionsneutral und wird nur zur Aufteilung verwendet.

Damit hat der Aufteilungsblock SPLITTER auch keinen Einfluss auf die Prüfsumme HSTR, die sowohl für die Länder Europas als auch für das Zielland identisch ist.

Zusammengefasst wird bei der Erfindung mit Bezug auf die Steuerungssoftware eine Struktur für deren vernetzte Funktionen ermittelt.

Für die Struktur wird eine strukturabhängig Prüfsumme als "Hash" ermittelt bzw. berechnet.

Die strukturabhängige Prüfsumme zeigt eindeutig eine zugeordnete Beschaffenheit der Struktur an.

Für jede Funktion der Steuerungssoftware wird eine funktionsabhängige Prüfsumme als "Hash" ermittelt bzw. berechnet.

Die funktionsabhängige Prüfsumme zeigt eindeutig Inhalt bzw. Beschaffenheit der Funktion an.

Aus den funktionsabhängigen Prüfsummen und aus der strukturabhängigen Prüfsumme wird eine Gesamtprüfsumme ermittelt bzw. berechnet, die für die Steuerungssoftware einen eindeutigen Fingerabdruck darstellt.

Damit zeigt die Gesamtprüfsumme eindeutig Inhalt bzw. Beschaffenheit der Steuerungssoftware an.

Eine unveränderte Gesamtprüfsumme zeigt eine unveränderte Steuerungssoftware an, die nicht erneut geprüft und nicht erneut zugelassen werden muss.

Eine veränderte Gesamtprüfsumme zeigt eine veränderte Steuerungssoftware an, die geprüft und zugelassen werden muss.

## Patentansprüche

1. Verfahren zur Kennzeichnung und Verifizierung einer Steuerungssoftware eines Schienenfahrzeugs,
- bei dem die Steuerungssoftware durch Funktionen (FKT_1,...) gebildet wird, wobei jede Funktion (FKT_1,...) eine ihr jeweils zugeordnete Aufgabe erfüllt,
- bei dem die Funktionen (FKT_1,...) in ihrer vernetzten Gesamtheit eine Struktur (STR) der Steuerungssoftware bilden,
- bei dem für jede Funktion (FKT_1,...) eine funktionsabhängige Prüfsumme (HFKT_1,...) erstellt wird,
- bei dem für die Struktur (STR) eine strukturabhängige Prüfsumme (HSTR) erstellt wird,
- bei dem aus den funktionsabhängigen Prüfsummen (HFKT_1,...) und aus der strukturabhängigen Prüfsumme (HSTR) eine Gesamtprüfsumme (HGES) für die Steuerungssoftware erstellt wird,
- so dass die Gesamtprüfsumme (HGES) die Steuerungssoftware für eine Zulassung in einem Land (EU, ZLL) kennzeichnet und verifiziert.

2. Verfahren nach Anspruch 1,
- bei dem bei unveränderten Funktionen (FKT_1,...) und bei unveränderter Struktur (STR) der Steuerungssoftware eine Gesamtprüfsumme (HGES_EU) gebildet wird, die eine unveränderten Steuerungssoftware anzeigt,
- bei dem bei einer länderspezifisch bedingten Änderung (ZLL) der Steuerungssoftware aus einer ausgesuchten unveränderten Funktion (FKT_2 EU) durch Änderung der Funktion eine länderspezifische Funktion (FKT_2 ZLL) gebildet wird,
- bei dem durch die Bildung der länderspezifischen Funktion (FKT_2 ZLL) eine länderspezifische Gesamtprüfsumme (HGES_ZLL) gebildet wird, die sich von der Gesamtprüfsumme (HGES_EU) der unveränderten Steuerungssoftware unterscheidet.

3. Verfahren nach Anspruch 1 oder 2,
- bei dem bei unveränderten Funktionen (FKT_1,...) und unveränderter Struktur (STR) der Steuerungssoftware eine Gesamtprüfsumme (HGES_EU) gebildet wird, die eine unveränderten Steuerungssoftware anzeigt,
- bei dem bei einer länderspezifisch bedingten Änderung (ZLL) der Struktur (STR) der Steuerungssoftware eine länderspezifische Struktur (STR) gebildet wird,
- bei dem durch die Bildung der länderspezifischen Struktur (STR) eine länderspezifische Gesamtprüfsumme gebildet wird, die sich von der Gesamtprüfsumme der unveränderten Steuerungssoftware unterscheidet.

4. Verfahren nach einem der vorhergehenden Ansprüche,
- bei dem in der Steuerungssoftware entweder die länderspezifische Funktion (FKT_2 ZLL) oder die unveränderte Funktion (FKT_2 EU) mit Hilfe einer Länderkennung (Netz_ID) aktiviert und betrieben wird,
- bei dem bei aktivierter länderspezifischer Funktion (FKT_2 ZLL) und bei unveränderter Struktur (STR) der Steuerungssoftware die länderspezifische Gesamtprüfsumme der Steuerungssoftware zur Verifikation angezeigt wird,
- bei dem bei aktivierter unveränderter Funktion (FKT_2 EU) und bei unveränderter Struktur (STR) der Steuerungssoftware die Gesamtprüfsumme (HGES_EU) der unveränderten Steuerungssoftware zur Verifikation angezeigt wird.

5. Verfahren nach einem der vorhergehenden Ansprüche, bei dem die Länderkennung (Netz_ID) in Abhängigkeit des Streckennetzes (EU, ZLL) gewählt wird, in dem sich das Schienenfahrzeug befindet oder in den das Schienenfahrzeug einfährt.

6. Verfahren nach einem der vorhergehenden Ansprüche, bei dem die Länderkennung (Netz_ID) und/oder eine entsprechende Versionsnummer der Steuerungssoftware, die auf der Gesamtprüfsumme (HGES_EU, HGES_ZLL) der Steuerungssoftware basiert, dem Schienenfahrzeugführer zu Kontrollzwecken angezeigt wird.

7. Verfahren nach einem der vorhergehenden Ansprüche,
- bei dem in der Steuerungssoftware eine erste Funktion (FKT_1) sowohl die unveränderte Funktion (FKT_2 EU) als auch die länderspezifische Funktion (FKT_2 ZLL) als nachgeschaltete Funktionen (FKT_2 EU, FKT_2 ZLL) mit Ergebnissen versorgt,
- bei dem die beiden nachgeschalteten Funktionen (FKT_2 EU, FKT_2 ZLL) jeweilige Ergebnisse ermitteln,
- bei dem unter Verwendung der Länderkennung (Netz_ID), die auf einen Auswahlblock (MERGER) wirkt, jedoch nur eines der Ergebnisse an eine weitere Funktion (FKT_3) übermittelt wird.

8. Verfahren nach einem der vorhergehenden Ansprüche,
- bei dem bei der Ermittlung der Struktur (STR) im Signallauf der Steuerungssoftware Verzweigungspunkte detektiert werden,
- bei dem über Verzweigungspunkte erkannte Verbindungen substituiert werden, um die Prüfsumme der Struktur (HSTR) zu berechnen.

## Claims

1. Method for identifying and verifying control software of a rail vehicle,
- in which the control software is formed by functions (FKT_1, ...), wherein each function (FKT_1, ...) performs a task respectively assigned thereto,
- in which the functions (FKT_1, ...), in their interconnected entirety, form a structure (STR) of the control software,
- in which a function-dependent checksum (HFKT_1, ...) is created for each function (FKT_1, ...),
- in which a structure-dependent checksum (HSTR) is created for the structure (STR),
- in which an overall checksum (HGES) for the control software is created from the function-dependent checksums (HFKT_1, ...) and from the structure-dependent checksum (HSTR),
- such that the overall checksum (HGES) identifies and verifies the control software for authorization in a country (EU, ZLL).

2. Method according to Claim 1,
- in which, in the case of unchanged functions (FKT_1, ...), and in the case of an unchanged structure (STR) of the control software, an overall checksum (HGES_EU) is formed and indicates unchanged control software,
- in which, in the case of a change (ZLL) to the control software for country-specific reasons, a country-specific function (FKT_2 ZLL) is formed from a chosen unchanged function (FKT_2 EU) by changing the function,
- in which forming the country-specific function (FKT_2 ZLL) forms a country-specific overall checksum (HGES_ZLL) that differs from the overall checksum (HGES_EU) of the unchanged control software.

3. Method according to Claim 1 or 2,
- in which, in the case of unchanged functions (FKT_1, ...) and an unchanged structure (STR) of the control software, an overall checksum (HGES_EU) is formed and indicates unchanged control software,
- in which, in the case of a change (ZLL) to the structure (STR) of the control software for country-specific reasons, a country-specific structure (STR) is formed,
- in which forming the country-specific structure (STR) forms a country-specific overall checksum that differs from the overall checksum of the unchanged control software.

4. Method according to one of the preceding claims,
- in which either the country-specific function (FKT_2 ZLL) or the unchanged function (FKT_2 EU) is activated and operated in the control software with the aid of a country identifier (Netz_ID),
- in which, in the case of an activated country-specific function (FKT_2 ZLL) and in the case of an unchanged structure (STR) of the control software, the country-specific overall checksum of the control software is displayed for verification,
- in which, in the case of an activated unchanged function (FKT_2 EU) and in the case of an unchanged structure (STR) of the control software, the overall checksum (HGES_EU) of the unchanged control software is displayed for verification.

5. Method according to one of the preceding claims, in which the country identifier (Netz_ID) is selected on the basis of the rail network (EU, ZLL) in which the rail vehicle is located or into which the rail vehicle is traveling.

6. Method according to one of the preceding claims, in which the country identifier (Netz_ID) and/or a corresponding version number of the control software, which is based on the overall checksum (HGES_EU, HGES_ZLL) of the control software, is displayed to the rail vehicle driver for monitoring purposes.

7. Method according to one of the preceding claims,
- in which, in the control software, a first function (FKT_1) supplies both the unchanged function (FKT_2 EU) and the country-specific function (FKT_2 ZLL), as downstream functions (FKT_2 EU, FKT_2 ZLL), with results,
- in which the two downstream functions (FKT_2 EU, FKT_2 ZLL) ascertain respective results,
- in which, using the country identifier (Netz_ID), which acts on a selection block (MERGER), only one of the results is however transmitted to a further function (FKT_3).

8. Method according to one of the preceding claims,
- in which, when ascertaining the structure (STR), branching points are detected in the signal profile of the control software,
- in which connections identified by way of branching points are substituted in order to calculate the checksum of the structure (HSTR).

## Revendications

1. Procédé d'identification et de vérification d'un logiciel de commande d'un véhicule ferroviaire,
- dans lequel le logiciel de commande est formé par les fonctions (FKT_1, ...), chaque fonction (FKT_1, ...) remplissant une tâche associée respective,
- dans lequel les fonctions (FKT_1, ...), dans leur groupe en réseau, forment une structure (STR) du logiciel de commande,
- dans lequel une somme de contrôle dépendant de la fonction (HFKT_1, ...) est générée pour chaque fonction (FKT_1, ...),
- dans lequel une somme de contrôle dépendant de la structure(HSTR) est générée pour la structure (STR),
- dans lequel une somme de contrôle totale (HGES) est générée pour le logiciel de commande à partir des sommes de contrôle dépendantes de la fonction (HFKT_1, ...) et de la somme de contrôle dépendant de la structure (HSTR),
- de sorte que la somme de contrôle totale (HGES) identifie et vérifie le logiciel de commande pour une autorisation dans un pays (EU, ZLL).

2. Procédé selon la revendication 1,
- dans lequel, pour des fonctions inchangées (FKT_1, ...) et pour une structure inchangée (STR) du logiciel de commande, une somme de contrôle totale (HGES_EU) est formée, qui indique un logiciel de commande inchangé,
- dans lequel en cas de modification conditionnelle spécifique au pays (ZLL) du logiciel de commande, une fonction spécifique au pays (FKT_2 ZLL) est formée à partir d'une fonction inchangée sélectionnée (FKT_2 EU) par modification de la fonction,
- dans lequel une somme de contrôle totale spécifique au pays (HGES_ZLL) est formée par la formation de la fonction spécifique au pays (FKT_2 ZLL), qui est différente de la somme de contrôle totale (HGES_EU) du logiciel de commande inchangé.

3. Procédé selon la revendication 1 ou 2,
- dans lequel, pour des fonctions inchangées (FKT_1, ...) et une structure inchangée (STR) du logiciel de commande, une somme de contrôle totale (HGES_EU) est formée, qui indique un logiciel de commande inchangé,
- dans lequel une structure spécifique au pays (STR) est formée en cas de modification conditionnelle spécifique au pays (ZLL) de la structure (STR) du logiciel de commande,
- dans lequel une somme de contrôle globale spécifique au pays est formée en formant la structure spécifique au pays (STR), qui est différente de la somme de contrôle totale du logiciel de commande inchangé.

4. Procédé selon l'une quelconque des revendications précédentes,
- dans lequel soit la fonction spécifique au pays (FKT_2 ZLL) soit la fonction inchangée (FKT_2 EU) est activée et commandée dans le logiciel de commande à l'aide d'un identifiant de pays (Netz ID),
- dans lequel la somme de contrôle totale spécifique au pays du logiciel de commande est indiquée pour vérification lorsque la fonction spécifique au pays (FKT_2 ZLL) est activée et la structure (STR) du logiciel de commande est inchangée,
- dans lequel la somme de contrôle totale (HGES_EU) du logiciel de commande inchangé est indiquée pour vérification lorsque la fonction inchangée (FKT_2 EU) est activée et la structure (STR) du logiciel de commande est inchangée.

5. Procédé selon l'une quelconque des revendications précédentes, dans lequel l'identifiant de pays (Netz ID) est sélectionné en fonction du réseau de lignes (EU, ZLL) dans lequel se trouve le véhicule ferroviaire ou dans lequel le véhicule ferroviaire entre.

6. Procédé selon l'une quelconque des revendications précédentes, dans lequel l'identifiant de pays (Netz ID) et/ou un numéro de version correspondant du logiciel de commande, qui est basé sur la somme de contrôle totale (HGES_EU, HGES_ZLL) du logiciel de commande, est indiqué au conducteur du véhicule ferroviaire à des fins de contrôle.

7. Procédé selon l'une quelconque des revendications précédentes,
- dans lequel une première fonction (FKT_1) dans le logiciel de commande fournit à la fois la fonction inchangée (FKT_2 EU) et la fonction spécifique au pays (FKT_2 ZLL) en tant que fonctions en aval (FKT_2 EU, FKT_2 ZLL) avec des résultats,
- dans lequel les deux fonctions en aval (FKT_2 EU, FKT_2 ZLL) déterminent des résultats respectifs,
- dans lequel, en utilisant l'identifiant de pays (Netz ID) agissant sur un bloc de sélection (MERGER), un seul des résultats est transmis à une fonction supplémentaire (FKT_3).

8. Procédé selon l'une quelconque des revendications précédentes,
- dans lequel, lors de la détermination de la structure (STR) dans le trajet du signal du logiciel de commande, des points de dérivation sont détectés,
- dans lequel les connexions détectées via des points de dérivation sont substituées afin de calculer la somme de contrôle de la structure (HSTR).
